# EUROPEAN PATENT APPLICATION

(11) **EP 2 353 399 A1**
(43) Date of publication of application: **10.08.2011**
(21) Application number: 11151328.9
(22) Date of filing: 18.01.2011
(51) Int. Cl.: A23C 9/152, B05B 7/00, B65D 81/32, A23L 1/00

(54) **Device and method for producing flavoured food foams, foams thus obtained and packages adapted to contain the products for obtaining such foams**

(30) Priority: 28.01.2010 IT MI20100111
(71) Applicant: Goglio, Luigi, 20146 Milano (IT)
(72) Inventor: Goglio, Luigi, 20146 Milano (IT)
(74) Representative: Petruzziello, Aldo

(57) **Abstract**

The invention relates to flavoured food foams. By putting into contact two components, a liquid one B) and a powder or gel one A) and adding aromatic and inert substances thereto, a stable product is generated that, sprayed by jets of steam appropriately oriented and deriving from a specially constructed generator, produces in a reactor (6) suitably shaped and interchangeable, enduring hot and flavoured foams with different flavours to be added to food for enhancing the quality, making them more pleasant to taste. The individual components are packaged in impermeable containers (100, 100', 100") with double compartments that allow for their mixing. The generator is built with a particular path for the steam to allow a proper outflow speed thereof. The reactor (6) is coupled to the generator via a quick connection for easy replacement and the rapid production of foams with different flavours to be applied to food.

## Description

The present invention relates to a device and a method for producing flavoured food foams, foams thus obtained, as well as packages adapted to contain products for obtaining such foams.

As an example, the quality enhancement of coffee is taken into consideration, being understood that what is exposed can be applied to many other products of the food chain,

It is known that there are many systems on the market for making coffee enhancing its quality. The most significant is the well-known cappuccino. There are indeed different methods and equipment allowing the emulsification of milk with steam and air, creating the foam combined with coffee to create a cappuccino.

There are also instant coffees that are sometimes supplemented with powdered milk producing a different taste than the more traditional one.

There is also coffee in capsules or pads that can be used by way of specific machines, though often expensive and complicated.

In this wide scenario of existing methods and solutions, some of which exemplified above, the present invention has the expressed object of providing a simple and inexpensive device and method for obtaining aromatic foams.

This object is achieved, according to the invention, with the device and the method having the features of the attached independent claims 1 and 7, respectively.

Another object of the invention is to impart a more pleasant taste to food in general and particularly to coffee and milk.

This object is achieved with flavoured foams according to claim 8, obtainable by said device and method.

A further object of the invention is to provide packages of simple construction and easy to use adapted to contain the products for obtaining the flavoured foams according to the invention.

This object is achieved with the features of claim 12.

The food products scenario, beyond the coffee sector, is very broad and allows applications for other possible uses of the present invention leading to the classification of compatible or complementary flavours to be combined with the foodstuffs themselves.

Some examples can be honey foams to pair with cheeses, salty foams to pair with savory vegetables, mushroom-flavoured foams, saffron-flavoured foams and foams with many other flavours that the market may require from time to time depending on the eating habits that every community may have.

The flavoured food foams according to the invention are obtainable by mixing in the presence of steam a specific liquid composition B) and a specific foamable composition A), in form of powder or gel, based on milk protein and containing a substrate (base) for incorporating flavours.

The liquid composition B) comprises a base salt or a weak organic acid able to produce gas as a result of an acid-base reaction, respectively, with a weak organic acid or a base salt contained in said foamable composition A).

From the above mentioned reaction the production of gas is obtained, such as carbon dioxide, which, once freed, is "trapped" in the protein network that is created during the expansion phase.

In particular, to achieve the result according to the present invention, the chemical formulation of the composition A), in powder form, and of the liquid composition B) shall be structured as follows:
A1) foamable composition, in powder form comprising a powder base for incorporating flavours formed by:
   - milk proteins such as caseinates, serum proteins, etc.
   - water-soluble substances, preferably mono or disaccharide sugars such as sucrose, fructose, lactose, etc.;
   - a base salt, preferably sodium acid carbonate, able to act as a foaming agent as a result of an acid-base reaction with a weak organic acid contained in an aqueous phase of the composition B);
B1) liquid-based composition comprising
   - an aqueous solution of a weak organic acid, preferably lactic acid, citric acid, tartaric acid, etc.., able to give an acid-base reaction with the base salt contained in the composition A) thus producing gas.

When the composition A) is in the form of gels, the compositions A) and B) are preferably formulated as follows:
A2) foamable composition in gel form comprising a gel base for incorporating flavours formed by
   - milk proteins such as caseinates, serum proteins, etc;
   - non-aqueous solvent, preferably glycerine,
   - water-soluble substances, preferably mono or disaccharide sugars such as sucrose, fructose, lactose, etc.;
   - a weak organic acid in powder form, preferably citric acid, tartaric acid, which acts as a foaming agent as a result of an acid-base reaction with a base salt contained in an aqueous phase of the composition B), preferably sodium acid carbonate;
B2) liquid composition comprising
   - an aqueous solution of a base salt, preferably sodium acid carbonate, able to give an acid-base reaction with the weak organic acid contained in the composition A2) thus producing gas.

The two above-mentioned phases A), B) (solid or gel phase and liquid phase) are to be formulated and proportionated to each other so as to react with appropriate timing in order to achieve and stabilize the foam under the influence of steam,

In particular, the compositions A1) and B1) must be dosed in a weight ratio of 1:3 - 1:4, preferably 1:6, while the compositions A2) and B2) must be dosed in a ratio of 1.5:1 - 2.5:1, preferably 2:1. In both cases, the time of development and stabilization of the foam is about 10". By varying the proportions timing can be lengthened or shortened.

Both the gel formulation and the powder formulation are completed by the following elements contained in the foamable composition A):
- emulsifying agents to stabilize the foam, such as mono- and di-glycerides of fatty acids, soya lecithin, etc.;
- thickening agents necessary to give structure and a suitable consistency to the product obtained by mixing after being foamed under the action of temperature. These can be starch, guar flours, xanthan gum, carrageenan;
- natural flavours and food colourings, consistent with the two compositions A) and B), which give the desired characteristic flavours (e.g., milky cream, vanilla, chocolate, mint, almond, orange, honey, for applications in the field of confectionery; mushrooms, cheese, saffron, for savory food applications);
- stabilizing agents that make the foamed mixture microbiologically stable over time. These may be the same sugars that are well known for their power to give a good microbiological stability with high concentrations, or preservatives such as sorbates, benzoates.

The device (50) for producing flavoured food foams, according to the invention comprises a steam supply pipe (1) from a boiler (2) and ending with a substantially vertical tube (5) in a container (6) acting as reactor, which can contain a mixture of a liquid composition B) and a foamable composition A) in form of powder or gel, said reactor (6) having an axially symmetrical concave inner surface and being tightly connected to the device (50), said tube (5) being closed at the free end thereof, which is spaced from the bottom of the container and provided with side holes (8) for the exit of steam, the flow of which is upwardly oriented by the concave wall of the reactor (6) producing turbulence.

The method for forming flavoured food foams comprises the steps of:
- introducing into a reactor (6) a mixture of a liquid composition B) and a foamable composition A) in form of powder or gel,
- injecting steam into the reactor (6) producing turbulence adapted to form hot and enduring foams incorporating droplets of stream.

Additional features of the invention will become more clear from the following detailed description, referring to embodiments purely illustrative and therefore not limiting, as detailed in the attached drawings, in which:
- Fig. 1 is a schematic view in vertical section of a device for producing flavored food foams according to the invention;
- Fig. 2 is a top view of the device of Fig. 1;
- Fig. 3a is a schematic plan view of an open blister package designed to store the products for producing flavored foams according to the invention;
- Fig 3b is a side view of the package of Fig. 3a;
- Fig 3c is a side view of the package of Fig. 3a shown closed;
- Fig, 4 is a plan view of another embodiment of the package;
- Figs. 5a and 5b are respectively a plan view and a side view of a further embodiment of the package.

The products A) and B) for obtaining flavoured food foams according to the invention are packaged in impermeable single-dose double-pocket containers in order to be kept separate and mixed just before use.

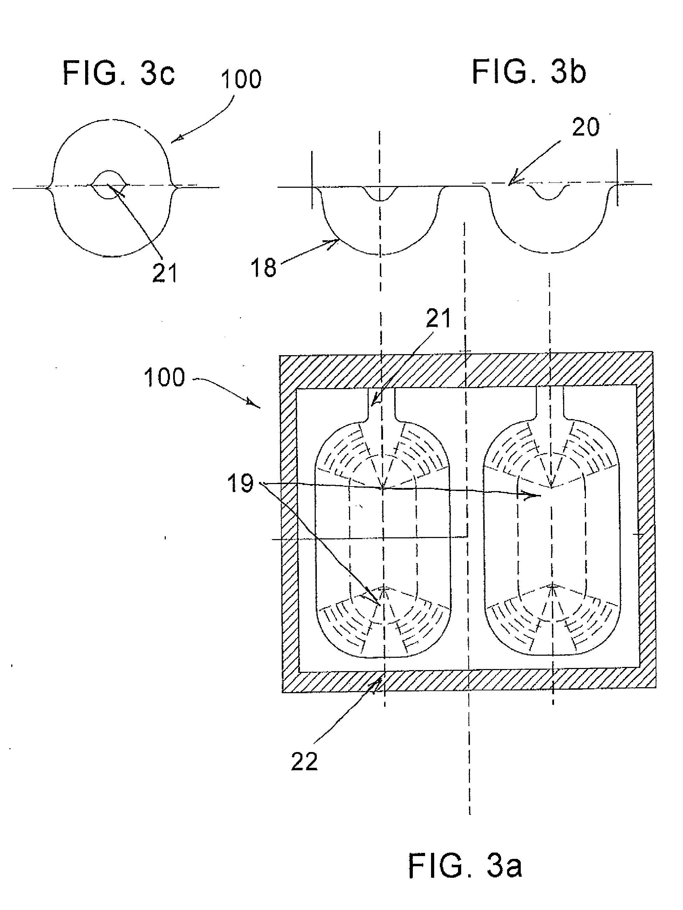

As shown in Figures 3a - 3c, a first type of package can be made from a deformable stiff blister 100 with a thickness from 125 micron in aluminum alloy with a drawing 18 so shaped to have an adequate deformability, and at the same time easily collapsible which is formed as a double-valve 19 in one of which is put the liquid part B) and in the other the solid part A), with a diaphragm 20, also in aluminum, with a thickness of 8 microns, which easily breaks under the action of manual or mechanical pressure keeping separate the solid part from the liquid part. Upon breaking by pressure of the two chambers, the two products exit and are mixed at the moment of use allowing them to exit from a proper orifice 21.

The volume of the two valves 19 provides a free space that allows to shake the product, if necessary, to better dissolve it.

The two valves 19 and the intermediate diaphragm are held together by heat-sealing 22, whereby the components must be heat-sealable one to the other.

After the two products have been mixed and the eventual subsequent shaking has been accomplished, the package can be tear opened at an appropriate zone or opened by cutting the edge with scissors. Operational solutions can be different according to techniques already in use on the market.

The packaging may occur in the presence of a mixture of nitrogen ensuring a lower air humidity and therefore a better preservation and stability of products over time.

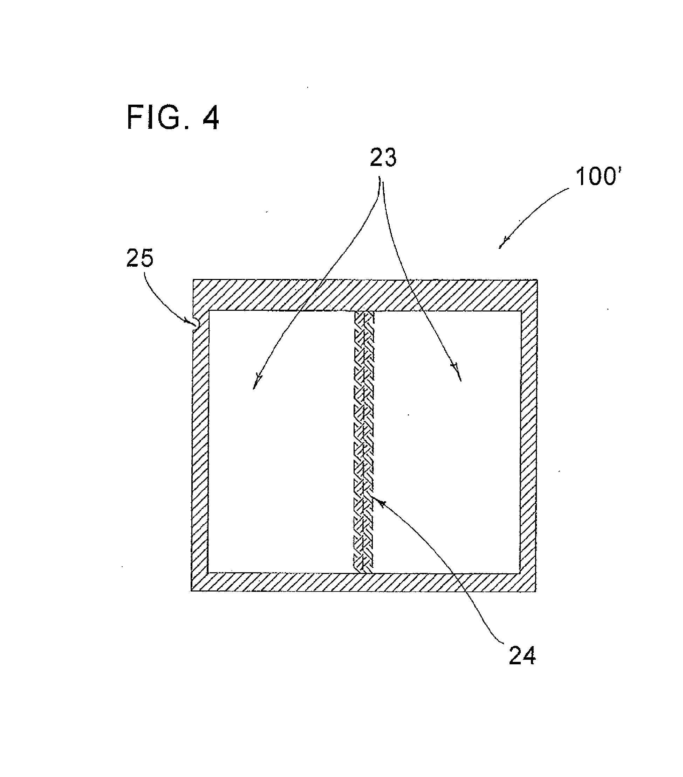

A second type of package is shown in Figure 4 and it consists of a flexible envelope 100' with double pocket 23, one for the liquid phase B) and one for the solid or gel phase A), where there is a separation diaphragm 24 collapsible between the two pockets that even under manual pressure may be opened allowing the mixing of the two products. The opening is by tear along a notch 25.

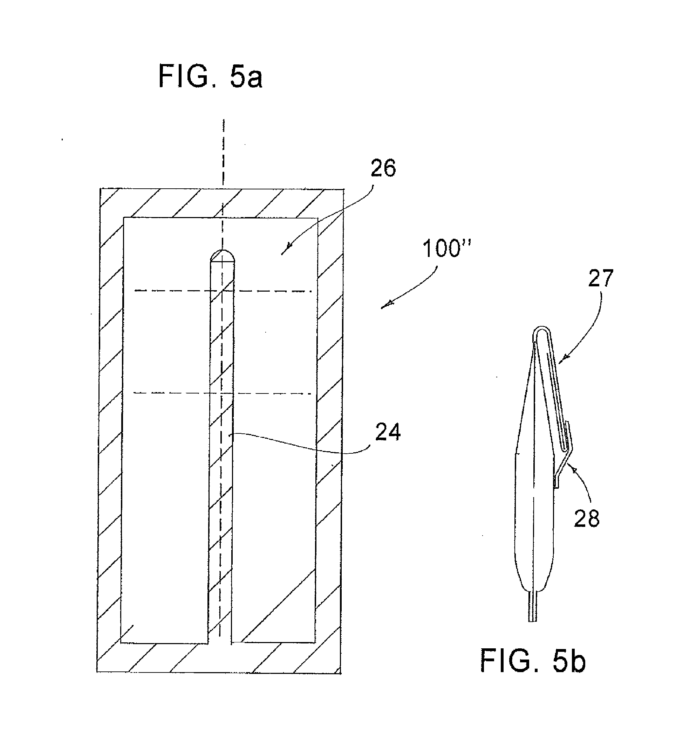

In the embodiment according to figures 5a and 5b, the package is still in the form of a double pocket flexible envelope 100", with the separation diaphragm interrupted at the upper part in order to leave a top space 26 which allows the mixing of the products A) and B), which is maintained closed by means of a double folding 27 of the envelope fixed by an adhesive 28 acting as a warranty seal (Fig. 5b). In this case, unrolling the folding, the two products come into contact and mix together.

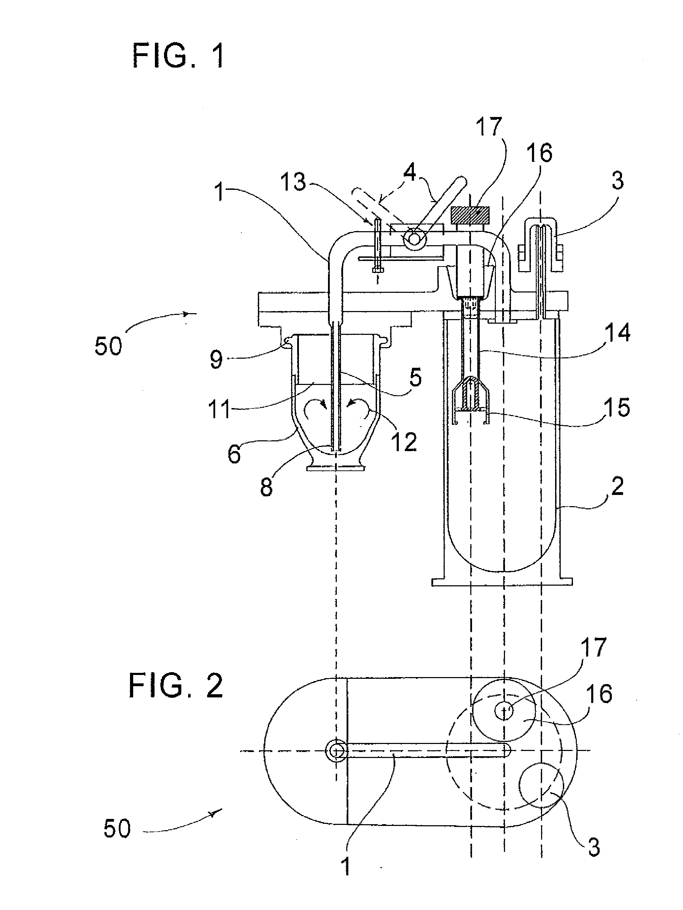

Figures 1 and 2 illustrate a device for producing flavoured foams according to the invention, by mixing the solid component A) and the liquid component B) described above, indicated globally with the reference number 50.

A steam supply pipe 1 which comes from a boiler 2, equipped with a weighted safety valve 3, in which the weight determines the pressure, leads the steam to an axially rotating cock 4 that when opened allows the passage of steam into a vertical tube 5 which enters a rigid container 6 acting as a reactor, The vertical tube has a defined length and stops at a precise distance from the bottom of the reactor, it is closed at the bottom and is equipped with horizontal side holes 8 for the exit of steam. The device has a water loading tube 14 provided with a system that avoid to exceed a predetermined level of water leaving space for the expansion of steam. This system consists of a floating valve 15 that closes the tube.

The tube 14 is equipped with a funnel-shaped container 16 in the upper portion thereof to facilitate filling by placing the device under a water faucet and a screw cap 17 to open and close said tube.

The vertical steam tube 5 has an outer diameter of 8 mm and an internal one of 6 mm while the two steam exit holes 8 have a diameter of 1.5 mm, the distance from the bottom of the reactor is 6 mm and steam jets strike the concave surface of the reactor which at that point is tilted around 45° at a distance of about 15 mm upwardly orienting the flow and generating rotational turbulence as indicated by the arrows 12. The above mentioned values must be intended with a tolerance of ± 10%.

The distance of the holes 8 from the bottom of the reactor, the curvature of the concave reactor coaxially to the steam tube, allowing the expansion of said steam gradually yielding the heat of condensation causing the reaction, the space between the tube and the wall of the reactor and the exit rate of the steam are defined for generating the best turbulence and optimum condensation of the steam at the moment when it releases heat to create foam.

The reactor, in which the reaction takes place, having a cup shape, is partially transparent and shaped at the upper rim with segmented projections 9 allowing quick connection by rotation around the vertical axis on the prominent part of the device.

The reactor 6 is of an interchangeable type to allow for easier use with the different flavours without cleaning operations.

The transparency of the reactor is necessary for visually checking the creation of foam therein and that the reaction is completed in order to stop the flow of steam at the right time before the foam converts to caramel, melts and decomposes, A sign 11 that indicates the level on the transparent part is convenient for determining the moment in which the foam reaches the predetermined maximum volume.

The rotating cock 4 is an approved start system for each cycle opening the steam supply valve coming from the boiler which can be separated or integrated into the system with a stop screw 13, which allows adjusting the opening to the exact point to optimize the cycle.

Of course the invention is not limited to the particular embodiments described above and illustrated in the attached drawings, but to it there may be made many changes in detail within the reach of a technician skilled in the art without going beyond the scope of the invention itself defined herein by the attached claims.

## Claims

1. A device (50) for producing flavoured food foams, comprising a steam supply pipe (1) coming from a boiler (2) and ending by means of a substantially vertical tube (5) inside a container (6) which acts as a reactor, adapted to contain a mixture made of a liquid composition B) and a foamable composition A) in form of powder or gel, said reactor (6) having an axially symmetrical concave inner surface and being tightly connected to the device (50), said tube (5) being closed at the free end thereof, which is spaced from the bottom of the container and provided with side holes (8) for the exit of steam, the flow of which is upwardly oriented by the concave wall of the reactor (6) to generate turbulence.

2. The device according to claim 1, wherein said tube (5) has an inner diameter of 6 mm and two horizontal holes for supplying steam having a diameter of 1.5 mm, and it ends at a distance of 15 mm from the bottom of said reactor (6).

3. The device according to claim 1 or 2, wherein said reactor (6) has a shaped upper rim with segmented projections (9), adapted to allow a tight joint to the device (50) and a quick release therefrom by means of rotation around its vertical axis.

4. The device according to any one of claims 1 to 3, **characterized in that** said reactor (6) is transparent for visually checking the content thereof, and has a sign (11) adapted to indicate the maximum prefixed volume of the foam.

5. The device according to any one of claims 1 to 4, **characterized in that** said steam supply pipe (1) coming from the boiler (2) is provided with an axially rotating cock (4), the opening of which allows steam to flow towards said tube (5) entering the reactor (6).

6. The device according to any one of claims 1 to 5, wherein said boiler (2) comprises a water loading tube (14) provided with a floating valve (15) which closes said tube and does not permit to exceed the prefixed level of water, said boiler (2) being additionally provided with a weighted safety valve (3), which operates when a prefixed internal pressure is exceeded.

7. A method for producing flavoured food foams comprising the steps of:
- introducing into a reactor (6) a mixture of a liquid composition B) with a foamable composition A) in form of powder or gel,
- injecting steam inside the reactor (6) to generate turbulence adapted to form hot and enduring foams.

8. Flavoured food foams, hot and enduring, incorporating droplets of steam obtainable with the method according to claim 7 by mixing, in the presence of steam, a liquid composition B) and a milk protein-based foamable composition A), in form of powder or gel, which contains a substrate (base) for incorporating flavours, said liquid composition B) comprising a base salt or a weak organic acid able to produce gas as a result of an acid-base reaction with, respectively, a weak organic acid or base salt contained in said foamable composition A).

9. The foams according to claim 8, wherein the chemical formulation of the composition A), in form of powder, and that of liquid composition B) are as follows:
A1) foamable composition in form of powder comprising a powder base for incorporating flavours formed by:
- milk proteins such as caseinates, serum proteins, and the like;
- water-soluble substances, preferably mono or disaccharide sugars such as for example sucrose, fructose, lactose, and the like;
- base salt, preferably sodium acid carbonate;
B1) liquid-based composition comprising
- an aqueous solution of a weak organic acid, preferably lactic acid, citric acid, tartaric acid, and the like, adapted to generate an acid-base reaction with the base salt contained in the composition A1);
the compositions A1) and B1) being in a ratio by weight ranging from 1:3 to 1:6.

10. The foams according to claim 8 in which the chemical formulation of composition A), in form of gel, and that of liquid composition B) are as follows:
A2) foamable composition, in form of gel, comprising a gel base for incorporating flavours formed by
- milk proteins such as caseinates, serum proteins, and the like;
- a non aqueous solvent, preferably glycerine;
- water-soluble substances, preferably mono or disaccharide sugars such as sucrose, fructose, lactose, and the like;
- a weak organic acid in form of powder, preferably citric acid, tartaric acid;
B2) liquid composition comprising
- an aqueous solution of a base salt, preferably sodium acid carbonate, adapted to give an acid-base reaction with the weak organic acid contained in the composition A2) thus producing gas,
the compositions A2) and B2) being in a ratio by weight ranging from 1.5:1, to 2.5:1.

11. The foams according to any one of the claims from 8 to 10 wherein said foamable composition A) further comprises one or more of the following additives:
- emulsifying agents to stabilize the foam, preferably mono-and di-glycerides of fatty acids, soya lecithin, and the like;
- thickening agents necessary to give a structure and suitable consistency to the product obtained by mixing after being foamed under the action of temperature, preferably starches, guar flour, xanthan, carrageenan;
- natural flavours and food colourings, consistent with the two compositions A) and B), able to confer the desired characteristic flavours, preferably flavours of milky cream, vanilla, chocolate, mint, almond, orange, honey, for confectionery applications; flavours of mushrooms, cheese, saffron, for savoury food applications;
- stabilizing agents which microbiologically stabilize the foamed product in the course of time, preferably the same sugars used in the compositions A), or preservatives such as sorbates, benzoates.

12. A package (100, 100', 100") adapted to contain separately a liquid composition B) and a foamable composition A), in form of powder or gel, and to permit the mixing thereof for obtaining, in the presence of steam, flavoured food foams according to any one of claims 8 to 11.

13. The package (100) according to claim 12, **characterized in that** it is formed by a deformable blister comprising two valves (19) which are heat-sealed one to the other and separated by means of a diaphragm (20) which is breakable by mechanical pressure.

14. The package (100') according to claim 12, **characterized in that** it is formed by a double-pocket flexible envelope (23), with a separation diaphragm (24) breakable by means of mechanical pressure, and comprising a notch (25) for tear opening.

15. The package (100") according to claim 12, **characterized in that** it is formed by a double-pocket flexible envelope with a separation diaphragm (24) leaving a top space (26) between the two components A), B), which is maintained closed by means of a double folding (27) of the envelope fixed by an adhesive (28) acting as a warranty seal.
